# EUROPEAN PATENT SPECIFICATION

(11) **EP 2 934 755 B1**
(45) Date of publication and mention of the grant of the patent: **21.12.2016**
(21) Application number: 12824867.1
(22) Date of filing: 21.12.2012
(51) Int. Cl.: B02C 18/22, A22C 17/00, B02C 18/30

(54) **PLANT FOR MINCING SAUSAGE MEAT FOR INDUSTRIAL USE**
ANLAGE ZUM ZERHACKEN VON WURSTBRÄT FÜR INDUSTRIELLE VERWENDUNG
INSTALLATION DE HACHAGE DE CHAIR À SAUCISSE POUR UTILISATION INDUSTRIELLE

(43) Date of publication of application: 28.10.2015
(73) Proprietor: Evolution S.r.l., 40069 Zola Predosa (Bo) (IT); Quadrana, Marcello, 40069 Zola Predosa (BO) (IT)
(72) Inventor: QUADRANA, Marcello, I-40069 Zola Predosa (BO) (IT)
(74) Representative: Fiammenghi, Eva
(86) International application number: PCT/IT2012/000395
(87) International publication number: WO 2014/097332

(56) References cited:
- US-A- 1 915 135
- US-A- 2 865 417
- US-A- 4 479 614

## Description

The present invention regards the entire plant for the production of the so-called mortadella "mousse", substantially made up of a meat loading unit, a unit for moving and pushing the same, supplying the so-called "pack" i.e. the mincing unit, subject of patents N° 0001337040, N° 0001341522, BO2011A000026, to which reference shall be made for the present invention. In particular, the innovative improvements are applied to the pushing unit, which replaces the conventional auger.

Actually, it had been observed that the conventional auger driving and pushing the pieces of frozen meat towards the blades and extruder required powerful driving means, considering the friction that occurred during the mincing of the meat driven in the helical motion of the auger. In addition, the meat recycled through the gap between the auger and the shell thereof was subject to organoleptic deterioration generating "slimy" areas within the minced product affected by the bacteriological revival. US-4479614 discloses a pump that feeds meat into a grinder.

The present invention aims at mainly overcoming these drawbacks by providing a system for conveying the product by means of a piston which "pulses" the meat through an extruder with approximately 5 mm holes. This allows avoiding at least three mixing stages, substantially reduced to two stages alone, so as to remove 24 cutting elements responsible for generating heat and releasing heavy metals into the minced product. Special tests revealed that producing 8400 kg of minced meat requires four and a half hours consuming 15 kWh per hour with respect to six hours consuming 287 kWh per hour.

These and other objects are attained by the device according to claim 1.

These and other characteristics shall be more apparent with reference to a simple embodiment provided purely by way of non-limiting example of the scope of protection of the present invention.

With reference to the attached drawings wherein:

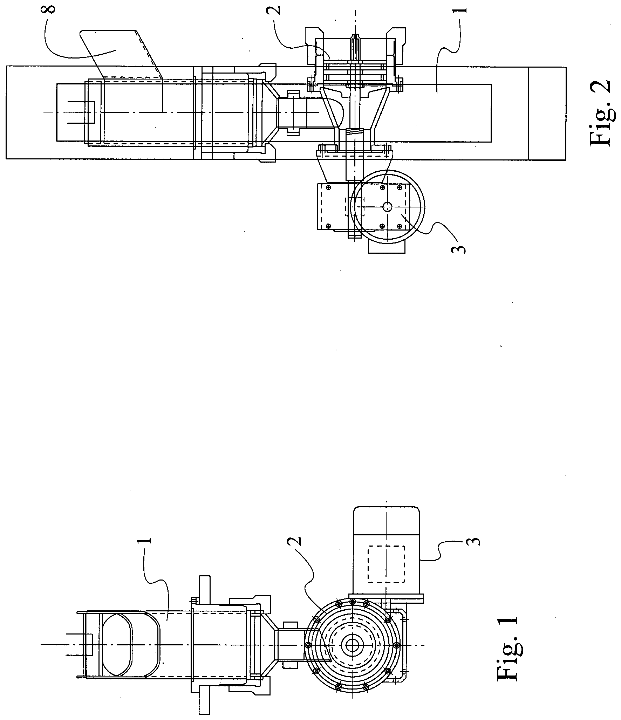

Figs 1, 2 represent a front and lateral section of the invention.

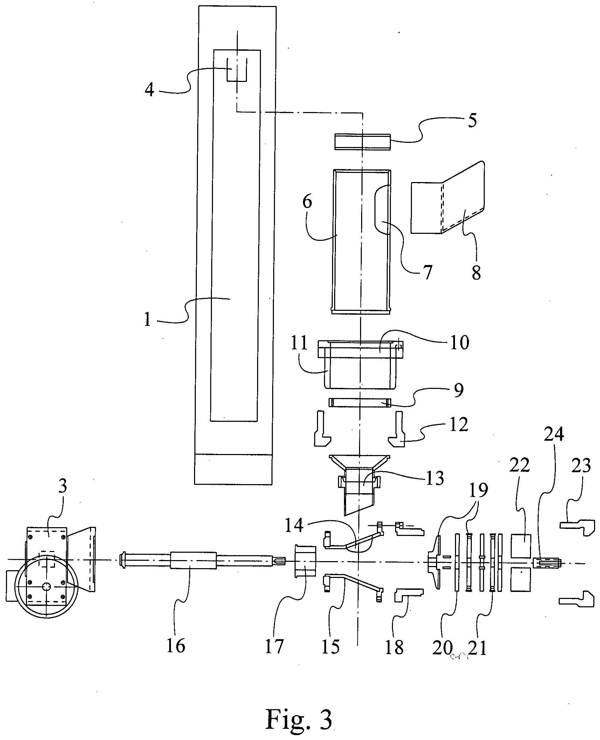

Fig 3 represents an exploded view of the invention.

With reference to such figures, a loading and movement unit for loading the product (pieces of meat frozen at about -7°, measuring about 2 cm by side) made up of two subunits, one above and one beneath the mincing unit 2, so as to the guarantee supply continuity lost by abandoning the auger solution, is indicated with 1.

The means for driving the mincing unit 2 are indicated with 3. 4 indicates the actuator of the upper subunit of the loading and movement unit 1, , the lower subunit not being shown, but being symmetrical with respect thereto, 5 indicates the loading press piston, 6 indicates the cylinder coupled thereto, 7 indicates the loading port at the loading hopper 8, 9 indicates a perforated disc with extruder functions (mould), 10 indicates a support plate, 11 indicates a bushing, 12 indicates the locking ring nut, 13 indicates the vertical funnel which pressure-conveys the roughed product to the mincing unit 2 through the gap 14 of the transverse funnel 15, 16 indicates the motor shaft, 17 indicates a bushing, 18 indicates a modified bushing, 19 indicates blade-holder components, 20 indicates perforated discs, 21 indicates spacers according to the teachings of the aforementioned patents, 22 indicates a crosspiece, 23 indicates a fastening ring nut, 24 indicates a spacer with an adjustment screw.

In practice, the execution details, dimensions, materials, shape and the like referring to the invention may however vary without departing from the scope of protection of the present industrial invention as defined by the claim.

## Claims

1. Plant for mincing sausage meat for industrial use comprising a loading and movement unit (1), a mincing unit (2) with relative driving means (3), wherein the loading and movement unit (1) (1) is made up of two subunits, arranged above and beneath the mincing unit (2), both subunits comprising a cylinder (6) with a loading port (7) at the loading hopper (8), a piston (5) moved by an actuator (4), a perforated disc (9) mechanically connected to a vertical funnel (13) which pressure-conveys - through an opening (14) - the pre-minced meat in a horizontal funnel (15) which is an integral part of a stator of the mincing unit (2), alongside a modified bushing (18) housing a locking ferrule (23), wherein on the motor shaft (16), without auger, there are splined (according to the known teachings) blade holders (19) alternated with discs (20) locked on the stator and suitable spacers (21), said mincing unit (2) further comprising a bushing (17), a crosspiece (22) and a spacer (24) with an adjustment screw.

## Patentansprüche

1. Anlage zum Zerhacken von Wurstbrät für industrielle Verwendung umfassend eine Lade- und Bewegungseinheit (1), eine Zerhackungseinheit (2) mit diesbezüglichen Antriebsmitteln (3), wobei die Lade- und Bewegungseinheit (1) aus zwei Untereinheiten gebildet ist, welche über und unter der Zerhackungseinheit (2) angeordnet sind, wobei beide Untereinheiten umfassen
einen Zylinder (6) mit einer Ladeöffnung (7) am Ladetrichter (8),
einen Kolben (5), der mit einem Aktuator (4) betätigt wird, eine Lochscheibe (9), die mit einem vertikalen Trichter (13) mechanisch verbunden ist, welcher das vorzerhackte Fleisch - durch eine Öffnung (14) - unter Druck in einen horizontalen Trichter (15) fördert, der ein integraler Bestandteil eines Stators der Zerhackungseinheit (2) ist, längsseits einer modifizierten Buchse (18), die eine Verschlusshülse (23) aufnimmt, wobei
auf der Motorwelle (16), ohne Schneckenförderer, (gemäß den bekannten Lehren) verkeilte Klingenhalter (19) abwechselnd mit am Stator befestigten Scheiben (20) und geeigneten Abstandhaltern (21) angeordnet sind, wobei
die Zerhackungseinheit (2) weiterhin eine Buchse (17), ein Kreuzstück (22) und einen Abstandhalter (24) mit einer Justierschraube umfasst.

## Revendications

1. Installation de hachage de chair à saucisse pour utilisation industrielle, comprenant une unité de chargement et de déplacement (1) et une unité de hachage (2) avec des moyens d'entraînement (3) associés, l'unité de chargement et de déplacement (1) se composant de deux sous-unités disposées au-dessus et au-dessous de l'unité de hachage (2), les deux sous-unités comprenant un cylindre (6) avec une ouverture de chargement (7) au niveau de la trémie de chargement (8), un piston (5) déplacé par un actionneur (4), un disque perforé (9) relié mécaniquement à un entonnoir vertical (13) qui amène par pression - à travers une ouverture (14) - la viande pré-hachée dans un entonnoir horizontal (15) qui fait partie intégrante d'un stator de l'unité de hachage (2), le long d'un manchon modifié (18) dans lequel est logée une bague de verrouillage (23), des porte-lames (19) étant montés par cannelures (selon les enseignements connus) sur l'arbre moteur (16), sans vis sans fin, en alternance avec des disques (20) verrouillés sur le stator et avec des pièces d'écartement (21) appropriées, l'unité de hachage (2) comprenant également un manchon (17), une pièce en croix (22) et une pièce d'écartement (24) avec une vis de réglage.
